# EUROPÄISCHE PATENTSCHRIFT

(11) **EP 0 912 849 B1**
(45) Veröffentlichungstag und Bekanntmachung des Hinweises auf die Patenterteilung: **08.11.2000**
(21) Anmeldenummer: 97935527.8
(22) Anmeldetag: 17.07.1997
(51) Int. Cl.: F16K 1/30

(54) **EINSCHRAUBVENTIL FÜR EINEN DRUCKBEHÄLTER**
SCREW-IN VALVE FOR A PRESSURE CONTAINER
VANNE A VISSER POUR UN CONTENANT SOUS PRESSION

(30) Priorität: 24.07.1996 LU 88793
(43) Veröffentlichungstag der Anmeldung: 06.05.1999
(73) Patentinhaber: Ceodeux Ultra Pure Equipment Technology S.A., 7505 Lintgen (LU)
(72) Erfinder: KREMER, Paul, L-7263 Walferdange (LU); STRUIK, Mike, L-8001 Strassen (LU)
(74) Vertreter: Schmitt, Armand
(86) Internationale Anmeldenummer: EP9703834
(87) Internationale Veröffentlichungsnummer: WO9803808

(56) Entgegenhaltungen:
- CH-A- 672 669
- DE-A- 2 209 410
- DE-C- 839 891
- DE-U- 8 816 306

## Beschreibung

Die Erfindung betrifft ein Absperrventil zum Einschrauben in einen Druckbehälter.

Bekannte Absperrventile zum Einschrauben in einen Druckbehälter umfassen einen Ventilkörper der an seinem unteren Ende einen Einschraubstutzen zum Einschrauben in eine mit einem Innengewinde ausgestattete Bohrung eines Druckbehälters aufweist. Der Ventilkörper weist einen Ventilsitz auf dem ein Schließelement zugeordnet ist. Ein Betätigungsorgan ist auf den Ventilkörper aufgesetzt und durch einen Verbindungsschaft mechanisch mit dem Schließelement verbunden. Beim eingeschraubten Ventil ragt der obere Teil des Ventilkörpers mit Ventilsitz, Schließelement, Verbindungsschaft und Betätigungsorgan nach außen vor. Es ist bekannt, daß ein derart vorstehendes Ventil eine mechanische und deshalb auch eine sicherheitstechnische Schwachstelle am Druckbehälter ist. Das Ventil kann durch Stoßeinwirkung von außen, zum Beispiel beim Transport, derart beschädigt werden, daß es abbricht und der unter Druck stehende Inhalt des Druckbehälters freigesetzt wird. Für transportable Druckbehälter, wie zum Beispiel Gasflaschen, ist deshalb seit langem vorgeschrieben, daß das Ventil bis zum Anschluß an eine Leitung mit einer aufgeschraubten massiven Ventilkappe zu schützen ist. Es kommt jedoch vor, daß man vergißt die Ventilkappe aufzuschrauben, daß eine passende Ventilkappe momentan nicht auffindbar ist, oder daß einfach keine Ventilkappe aufgeschraubt werden kann, zum Beispiel weil eine Leitung an einen seitlichen Anschlußstutzen des Ventils angeschlossen ist. In all diesen Fällen bleibt das vorstehende Ventil ungeschützt und der Gefahr des Abbrechens ausgesetzt, was besonders bei giftigem, korrosivem oder feuergefährlichem Inhalt des Druckbehälters ein hohes Sicherheitsrisiko bedeutet.

Die schweizerische Patentschrift CH 672 669 beschreibt ein Gassicherheitsventil, mit einem ersten Ventilsitz oberhalb des Einschraubgewindes. Dieser erste Ventilsitz bildet zusammen mit einem Schließkolben das eigentliche Gasventil aus. Unterhalb des Einschraubgewindes ist eine Sicherheitsvorrichtung angeordnet, die einen zweiten Ventilsitz und einen Hilfskolben umfaßt. Der Hilfskolben weist einen Betätigungsstift auf, der an einem Betätigungsstift des Schließkolbens anliegt. Die Sicherheitsvorrichtung ist derart gestaltet, daß sie den Gasfluß bei einem Ansteigen der Durchstromgeschwindigkeit des Gases unterbricht. Ein Ansteigen der Durchstromgeschwindigkeit kann z.B. erfolgen, wenn der Ventilkörper an einer Sollbruchstelle zwischen dem Einschraubgewinde und dem ersten Ventilsitz abbricht.

Die deutsche Offenlegungsschrift DE 22 09 410 beschreibt ein Auslaßventil, mit einem ersten Ventilsitz oberhalb des Einschraubstutzens und einem zweiten Ventilsitz unterhalb des Einschraubstutzens. Der erste Ventilsitz ist Bestandteil eines Absperrventils umfassend ein Verschlußglied das mechanisch mit einer Betätigungsvorrichtung verbunden ist, die auf den Ventilkörper aufgesetzt ist. Der zweite Sitz ist mit einem Verschlußglied Bestandteil eines reinen Sicherheitsventils, welches bei übermäßiger Strömung schließt. Der Ventilkörper des Ventils weist eine Sollbruchstelle zwischen dem Einschraubgewinde und dem ersten Ventilsitz auf. Bricht der Ventilkörper an dieser Sollbruchstelle ab, so schließt das zusätzliche Sicherheitsventil unterhalb des Einschraubstutzens.
Die deutsche Patentschrift DE 839 891 zeigt in Abbildung 1 ein Flaschenventil mit einem Rückschlagventil als Abschlußorgan. Dieses Rückschlagventil weist einen Absperrsitz und ein federbetätigtes Absperrelement auf, welche unterhalb des Einschraubstutzens angeordnet sind um die Bauhöhe des Ventils außerhalb des Druckbehälters auf ein Mindestmaß zu begrenzen. Eine Betätigungseinrichtung ermöglicht es das Rückschlagventil zu entsperren, indem das Absperrelement mittels eines Stößels an einem Kolben von seinem Absperrsitz abgehoben wird. Das Absperrelement ist hierbei mit dem Stößel mechanisch nicht verbunden.

Der vorliegenden Erfindung liegt die Aufgabe zugrunde ein Absperrventil zum Eischrauben in einen Druckbehälter zu schaffen, bei dem das Risiko, daß bei einem Abbrechen des Ventils, der unter Druck stehende Inhalt des Druckbehälters freigesetzt wird, durch einfache und billige Maßnahmen auf ein Minimum zu reduzieren.

Diese Aufgabe wird durch ein Ventil nach Anspruch 1 gelöst. Das erfindungsgemäße Einschraubventil umfaßt in bekannter Weise einen Ventilkörper mit einem Einschraubstutzen, zum Einschrauben in eine mit einem Innengewinde ausgestattete Bohrung eines Druckbehälters, einen Ventilsitz und ein dem Ventilsitz zwecks Erzielen der Absperrfunktion des Absperrventils zugeordnetes Schließelement. Ein Betätigungsorgan ist auf den Ventilkörper aufgesetzt ist; und ein Verbindungsschaft verbindet das Schließelement im Ventilkörper mechanisch mit dem Betätigungsorgan. Das Ventil unterscheidet sich von den bekannten Ventilen zuerst einmal dadurch, daß der Ventilsitz derart im Ventilkörper angeordnet ist, daß er beim eingeschraubten Ventil nicht wie allgemein üblich außerhalb, sondern innerhalb des Druckbehälters liegt. In anderen Worten, der Ventilsitz ist entweder innerhalb oder unterhalb des Einschraubstutzens angeordnet. Erfindungsgemäß ist das Schließelement dem Ventilsitz hierbei derart zugeordnet, daß beim eingeschraubten Ventil, ein Überdruck im Druckbehälter auf das am Ventilsitz abgedichtet anliegende Schließelement eine Schließkraft in Richtung Ventilsitz ausübt. Bricht der vorstehende Teil des in den Druckbehälter eingeschraubten erfindungsgemäßen Ventils ab, so bleibt der Ventilsitz innerhalb oder unterhalb des Einschraubstutzens fast ausnahmslos intakt und der Überdruck im Druckbehälter hält das Schließelement gegen den Ventilsitz gepreßt, so daß keine Leckage am übrigbleibenden Ventilbruchstück entsteht. Je höher der Überdruck im Druckbehälter ist, desto höher ist die auf das Schließelement im übrigbleibenden Ventilbruchstück wirkende Schließkraft. Beim erfindungsgemäßen Ventil ist folglich das Risiko, daß bei einem Abbrechen des Ventils, der unter Druck stehende Inhalt des Druckbehälters freigesetzt wird, durch einfache und billige Maßnahmen auf ein Minimum reduziert, wobei das Ventil im Falle eines Abbrechens ein ausgesprochenes "Failsafe"-Verhalten aufweist. Damit beim Abbrechen des vorstehenden Teils des Ventils, der in den Druckbehälter eingeschraubte Teil des Ventilkörpers nicht zu starken Beanspruchungen ausgesetzt ist, die zu Verformungen und daher zu Undichtigkeiten besonders im Einschraubgewinde führen können, weist der Ventilkörper oberhalb des Einschraubstutzens eine Sollbruchstelle auf, die beim eingeschraubten Ventil außerhalb des Druckbehälters liegt und vorzugsweise unmittelbar an den Einschraubstutzen angrenzt. Auf den Ventilkörper ist ein Betätigungsorgan aufgesetzt, das mittels eines Schafts mechanisch mit dem Schließelement verbunden ist. Damit beim Abbrechen des vorstehenden Teils des Ventils, der Ventilsitz und das Schließelement keinen zu starken Beanspruchungen ausgesetzt sind, die ebenfalls zu Verformungen und daher zu Undichtigkeiten führen können, weist der Schaft des Schließelements ebenfalls eine Sollbruchstelle auf. Bei geschlossenem Ventil soll die Sollbruchstelle am Schaft des Schließelements im wesentlichen auf gleicher Höhe liegen wie die Sollbruchstelle am Ventilkörper, damit das Ventil unter der vorgegebenen maximalen Stoßbeanspruchung in einer Ebene sozusagen abgeschert wird.

Der Ventilsitz und das Schließelement werden vorzugsweise nicht innerhalb, sondern unterhalb des Einschraubstutzens angeordnet. Die für die Sicherheitsfunktion des Ventils wichtige mechanische Festigkeit des Einschraubstutzens wird somit nicht durch eine in den Körper des Einschraubstutzens integrierte Kammer für das Schließelement geschwächt. Auch sind der Ventilsitz und das Schließelement beim Abbrechen des vorstehenden Teils des Ventils unter einem relativ massiven Einschraubstutzen am besten gegen mechanische Beschädigungen geschützt. Weiterhin ist hervorzuheben, daß beim Einschrauben eines konischen Einschraubstutzen in eine mit einem Innengewinde ausgestattete Bohrung eines Druckbehälters, große Spannungen im Einschraubstutzens auftreten. Ist der innere Durchmesser der Bohrung zu klein, können diese Spannungen einen innerhalb des Einschraubstutzens liegenden Ventilsitz derart stark verformen, daß die Dichtheit des Ventils beeinträchtigt wird.

Um auch bei niedrigem Druck im Druckbehälter zu gewährleisten, daß das Schließelement fest gegen den Ventilsitz gepreßt wird, wird dem Schließelement vorzugsweise eine Schließfeder derart zugeordnet, daß sie auf das Schließelement eine Kraft in Richtung Ventilsitz ausübt. Diese Schließfeder gewährleistet darüber hinaus, daß bei geöffnetem Ventil auf das Schließelement eine Schließkraft ausgeübt wird, die bei Abbrechen des Betätigungsorgans das Schließelement in Schließstellung gegen den Ventilsitz drückt.

Das Schließelement ist vorteilhaft in einem Verlängerungsstutzen angeordnet, der unterhalb des Einschraubstutzens angeordnet ist, so daß er beim eingeschraubten Ventil innerhalb des Druckbehälters liegt. In diesem Verlängerungsstutzen sind das Schließelement und der Ventilsitz im ausgebauten Zustand und beim Einschrauben in den Druckbehälter wirksam gegen Beschädigungen beschützt. Die vorerwähnte Schließfeder wird dann ebenfalls vorteilhaft in den Verlängerungsstutzen integriert, so daß im Ventilkörper oberhalb des Einschraubstutzens der Platz für eine Federkammer eingespart werden kann. Weiterhin ist die Schließfeder unterhalb des Ventilsitzes keiner Korrosion durch eindringende Feuchtigkeit von Außen ausgesetzt.

Soll das Ventil ein Tauchrohr aufweisen, so ist der vorerwähnte Verlängerungsstutzen ein ideale Anschlußmöglichkeit für dieses Tauchrohr. Ein solches Tauchrohr wird zum Beispiel vorteilhaft wie folgt in den Verlängerungsstutzen montiert. Eine Überwurfmuffe ist derart in den Verlängerungsstutzen einschraubbar, daß sie einen ringförmigen Ansatz am Tauchrohr axial in dem Verlängerungsstutzen blockiert. Ein Gewindestift ist dagegen seitlich in den Verlängerungsstutzen derart eingeschraubt, daß er das Tauchrohr gegen Verdrehen blockiert. Bei dieser Ausführung wird eine im Verlängerungsstutzen angeordnete Schließfeder vorteilhaft vom ringförmigen Ansatz am Tauchrohr abstützt.

Weitere Merkmale und Vorteile ergeben sich aus der Beschreibung eines Ausführungsbeispiels des erfindungsgemäßen Ventils, die anhand der beigefügten Zeichnung vorgenommen wird. Es zeigt:
Figur 1 einen Längsschnitt durch ein erfindungsgemäßes Ventil;
Figur 2 einen Längsschnitt durch das übrigbleibende Ventilbruchstück des Ventils der Figur 1, nachdem der vorstehende Teil dieses Ventils direkt oberhalb des Druckbehälters abgebrochen ist.

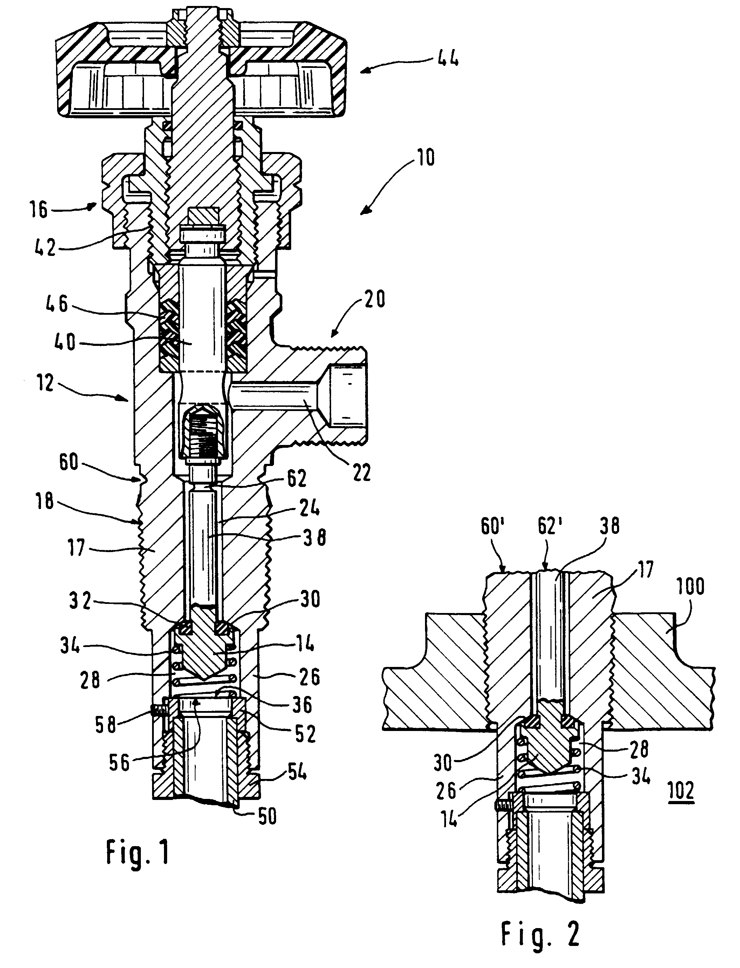

Das in Figur 1 zur Illustration der Erfindung gezeigte Ventil ist ein Absperrventil 10 in Eckausführung zum Einschrauben in eine mit einem Innengewinde ausgestattete Bohrung eines Druckbehälters. Das gezeigte Ventil besteht im wesentlichen aus einem Ventilkörper 12, einem Schließelement 14 und einem Betätigungsorgan, wie zum Beispiel dem gezeigten Spindelantrieb 16.

Zum abgedichteten Einschrauben in eine mit einem Innengewinde ausgestattete Bohrung eines Druckbehälters weist der Ventilkörper 12 einen konischen Einschraubstutzen 17 mit einem Außengewinde 18 auf. Unter dem Einschraubstutzen 17 wird der Ventilkörper 12 durch einen zylindrischen Stutzen 26 verlängert. Der Außendurchmesser dieses Verlängerungsstutzens 26 ist hierbei kleiner als der kleinste Außendurchmesser des konischen Einschraubstutzens 17, so daß der Verlängerungsstutzen 26 einfach durch das Innengewinde der Bohrung am Druckbehälter durchsteckbar ist. Oberhalb des Einschraubstutzens 17 ist seitlich am Ventilkörper 12 ein Gewindestutzen 20 mit einem Ausgangskanal 22 ausgebildet. Dieser seitliche Ausgangskanal 22 mündet im Ventilkörper 12 in eine zentrale Ventilbohrung 24 die den Einschraubstutzen 17 axial durchquert und ihrerseits in eine Kammer 28 mündet. Letztere erstreckt sich über die gesamte Länge des vorerwähnten Verlängerungsstutzens 26, bis in dessen Stirnfläche. Ein Ventilsitz 30, dessen konische Dichtfläche der Kammer 28 zugekehrt ist, umgibt die Einmündung der zentralen Ventilbohrung 24 in die Kammer 28. Dieser Ventilsitz 30 befindet sich also unmittelbar unterhalb des Einschraubstutzens 17.

Das Schließelement 14 ist in der Kammer 28 des Verlängerungsstutzens 26 unmittelbar unterhalb des Ventilsitz 30 angeordnet und ist relativ zum Ventilsitz 30 axial in der Kammer 28 verschiebbar. Die Abdichtung des Schließelements 14 am Ventilsitz 30 erfolgt beim gezeigten Ventil 10 durch ein elastisches Dichtelement 32, das am Schließelement 14 angeordnet ist. Liegt das Schließelement 14 dichtend an dem konischen Ventilsitz 30 an, so übt ein Überdruck im Druckbehälter auf das Schließelement 14 eine Schließkraft in Richtung Ventilsitz 30 aus. Diese hydrostatische Schließkraft wird vorteilhaft durch die Schließkraft einer Schließfeder 34 ergänzt, die in der gezeigten Ausführung in der Kammer 28 unterhalb des Schließelements 14 angeordnet ist und sich über eine Schulterfläche 36 am Ventilkörper 12 abstützt.

Ein Schaft 38 verlängert das Schließelement 14 durch die zentrale Ventilbohrung 24 bis oberhalb des Einschraubstutzens 17. Da der Querschnitt dieses Schafts 38 wesentlich kleiner ist als der Querschnitt der zentralen Ventilbohrung 24, bleibt ein Verbindungskanal mit ringförmigem freien Querschnitt um den Schaft 38 übrig. Bei vom Ventilsitz 30 abgehobenen Schließelement kann der unter Druck stehende Inhalt des Druckbehälters von der Kammer 28 durch diesen Verbindungskanal in den Ausgangskanal 22 des Ventils 10 gelangen und von hieraus in eine an den Gewindestutzen 20 angeschlossene Leitung einströmen. Es bleibt festzustellen, daß die zentrale Ventilbohrung 24 die mechanische Festigkeit des Einschraubstutzens 17 im Vergleich zu einem herkömmlichen Ventil, mit einem Ventilsitz und Schließelement die oberhalb des Einschraubstutzens angeordnet sind, nicht wesentlich beeinträchtigt.

Der Schaft 38 ist mit einer Antriebsspindel 40 des Spindelantriebs 16 mechanisch verbunden. Beim gezeigten Spindelantrieb 16 handelt es sich um eine klassische Ausführung mit Linksgewinde 42 und Handrad 44, die einfach auf das obere Ende des Ventilkörpers 12 aufgeschraubt wird. TEFLON®-Packungen 46 dichten die Antriebsspindel 40 zum Ventilkörper 12 ab. Natürlich könnte der gezeigte Spindelantrieb 16 auch durch eine andere Betätigungsvorrichtung ersetzt werden, ohne daß hierbei die Wirkung der Erfindung beeinträchtigt würde. So könnte als Betätigungsvorrichtung zum Beispiel auch ein elektrischer oder pneumatischer Stellantrieb eingesetzt werden.

Das in den Figuren gezeigte Ventil 10 weist weiterhin ein Tauchrohr 50 auf, das in die Kammer 28 des Verlängerungsstutzens 26 einmündet und in dieser leicht ein- und ausbaubar befestigt ist. An dem in die Kammer 28 eingeführten Ende, weist dieses Tauchrohr einen Ringansatz 52 auf, der fest mit dem Tauchrohr 50 verbunden ist. Eine über das Tauchrohr 50 gestülpte Überwurfmuffe 54 mit Außengewinde wird in ein Innengewinde der Kammer 28 eingeschraubt und drückt den Ringansatz 52 axial gegen eine in die Kammer 28 eingearbeitete Schulterfläche 56. Wird für einen Druckbehälter mit seitlich eingebautem Ventil 10, ein abgebogenes Tauchrohr 50 eingesetzt, so wird vorteilhaft ein Gewindestift 58 in eine seitliche Bohrung des Verlängerungsstutzens 26 eingeschraubt, um das Tauchrohr 50 gegen Verdrehen zu blockieren. Es bleibt anzumerken, daß der Ringansatz 52 vorteilhaft die Schulterfläche 36 ausbildet auf die sich die Schließfeder 34 abstützt. Natürlich kann das gezeigte Ventil 10 auch ohne Tauchrohr eingesetzt werden, wobei die Schulterfläche 36 dann direkt durch die Einschraubmuffe 54 ausgebildet werden kann.

In dem in Figur 1 gezeigtem Ventilkörper 12 wird eine Sollbruchstelle, zum Beispiel durch eine umlaufende Kerbe 60, unmittelbar oberhalb des Einschraubstutzens 17 ausgebildet. Im Schaft 38 wird auf ungefähr gleicher Höhe ebenfalls eine Sollbruchstelle durch eine umlaufende Kerbe 62 ausgebildet. Wird das in den Gewindestutzen des Druckbehälters eingeschraubte Ventil 10 einer äußeren Stoßbelastung großer Intensität ausgesetzt, so brechen der Ventilkörper und der Schaft 38 an den vorbestimmten Sollbruchstellen 60 und 62 ab.

Figur 2 zeigt das Resultat eines solchen Stoßversuchs. Der obere Teil des Ventils 10 wurde an den Sollbruchstellen 60' und 62' regelrecht abgeschert. Vom Ventilgehäuse 12 sind einzig und allein der in den Gewindestutzen 100 eingeschraubte Einschraubstutzen 17 und der im Inneren des Druckbehälters 102 liegende Verlängerungsstutzen 26 übriggeblieben. In der unbeschädigten Kammer 28 des Verlängerungsstutzens 26 wird das Schließelement 14 durch den Überdruck im Inneren des Druckbehälters 102 und durch die Schließfeder 34 gegen den unbeschädigten Ventilsitz 30 gedrückt. Der unter Druck stehende Inhalt des Druckbehälters kann somit nicht durch das in der Bohrung des Druckbehälters übriggebliebene Ventilbruchstück aus dem Druckbehälter entweichen. Die Schließfeder 34 gewährleistet, einerseits daß sogar das im geöffnetem Zustand abgebrochene Ventil sofort nach dem Abbrechen schließt und anderseits, daß auch bei niedrigem Innendruck im Druckbehälter das übriggebliebene Ventilbruchstück zuverlässig verschlossen bleibt.

## Patentansprüche

1. Absperrventil zum Einschrauben in einen Druckbehälter umfassend:
einen Ventilkörper (12) mit Einschraubstutzen (17) und einem Ventilsitz (30);
ein dem Ventilsitz (30) zwecks Erzielen der Absperrfunktion des Absperrventils zugeordnetes Schließelement (14);
ein Betätigungsorgan (44) das auf den Ventilkörper aufgesetzt ist; und
einen Verbindungsschaft (38) der das Schließelement (14) im Ventilkörper (12) mit dem Betätigungsorgan (44) mechanisch verbindet;
**dadurch gekennzeichnet,**
daß der Ventilsitz (30) innerhalb oder unterhalb des Einschraubstutzens (17) angeordnet ist, so daß er beim eingeschraubten Ventil innerhalb des Druckbehälters liegt;
daß das Schließelement (14) dem Ventilsitz (30) derart zugeordnet ist, daß beim eingeschraubten Ventil, ein Überdruck im Druckbehälter auf das am Ventilsitz (30) abgedichtet anliegende Schließelement (14) eine Schließkraft in Richtung Ventilsitz (30) ausübt; und
daß der Ventilkörper (12) und der Verbindungsschaft (38) oberhalb des Einschraubstutzens (17) eine Sollbruchstelle (60, 62) aufweisen die beim eingeschraubten Ventil außerhalb des Druckbehälters liegen.

2. Ventil nach Anspruch 1, dadurch gekennzeichnet, daß der Ventilsitz (30) und das Schließelement (14) unterhalb des Einschraubstutzens (17) angeordnet sind.

3. Ventil nach Anspruch 1 oder 2, dadurch gekennzeichnet, daß die Sollbruchstelle (60) am Ventilkörper (12) unmittelbar an den Einschraubstutzen (17) angrenzt.

4. Ventil nach einem der Ansprüche 1 bis 3, dadurch gekennzeichnet, daß bei geschlossenem Ventil die Sollbruchstelle (62) am Schaft des Schließelements (14) und die Sollbruchstelle am Ventilkörper (12) im wesentlichen in der gleichen Ebene liegen.

5. Ventil nach einem der Ansprüche 1 bis 4, dadurch gekennzeichnet, daß dem Schließelement (14) eine Schließfeder (34) derart zugeordnet ist, daß sie auf das Schließelement (14) eine Kraft in Richtung Ventilsitz (30) ausübt.

6. Ventil nach einem der Ansprüche 1 bis 5, gekennzeichnet durch einen Verlängerungsstutzen (26) der unterhalb des Einschraubstutzens (17) angeordnet ist, so daß er beim eingeschraubten Ventil innerhalb des Druckbehälters liegt, wobei das Schließelement (14) in diesem Verlängerungsstutzen (26) angeordnet ist.

7. Ventil nach Anspruch 6, dadurch gekennzeichnet, daß ein Tauchrohr (50) in den Verlängerungsstutzen (26) eingeführt ist und in diesem befestigt ist.

8. Ventil nach Anspruch 7, gekennzeichnet durch:
einen ringförmigen Ansatz (52) am Tauchrohr (50), und
eine Überwurfmuffe (54) die in den Verlängerungsstutzen (26) derart einschraubt ist, daß sie den ringförmigen Ansatz (52) am Tauchrohr (50) axial in dem Verlängerungsstutzen (26) axial blockiert.

9. Ventil nach Anspruch 5 und Anspruch 8, dadurch gekennzeichnet, daß die Schließfeder (34) im Verlängerungsstutzen (26) angeordnet ist und sich auf dem ringförmigen Ansatz (52) am Tauchrohr abstützt.

10. Ventil nach Anspruch 8 oder 9, gekennzeichnet durch einen Gewindestift (58) der seitlich in den Verlängerungsstutzen (26) derart eingeschraubt ist, daß er das Tauchrohr (50) gegen Verdrehen blockiert.

## Claims

1. Shut-off valve for screwing into a pressure vessel, comprising:
a valve body (12) with screwed connection piece (17) and a valve seat (30);
a closing element (14) assigned to the valve seat (30) for the purpose of accomplishing the shut-off function of the shut-off valve;
an actuating mechanism (44) mounted on the valve body; and
a connecting shank (38) which mechanically joins the closing element (14) in the valve body (12) to the actuating mechanism (44);
**characterised in that**
the valve seat (30) is located inside or below the screwed connection piece (17), so that with the valve screwed in, it lies inside the pressure vessel,
that the closing element (14) is assigned to the valve seat (30) in such a way that with the valve screwed in, a positive pressure in the pressure vessel exerts a closing force in the direction of the valve seat (30) on the closing element (14), which rests against the valve seat (30) in a sealed manner, and
that the valve body (12) and the connecting shank (38) above the screwed connection piece (17) have a predetermined breaking point (60, 62) which, with the valve screwed in, lie outside the pressure vessel.

2. Valve as claimed in Claim 1, characterised in that the valve seat (30) and the closing element (14) are located below the screwed connection piece (17).

3. Valve as claimed in Claim 1 or 2 , characterised in that the predetermined breaking point (60) on the valve body (12) is directly adjacent to the screwed connection piece (17).

4. Valve as claimed in one of claims 1 to 3, characterised in that with the valve closed, the predetermined breaking point (62) on the shank of the closing element (14) and the predetermined breaking point on the valve body (12) lie substantially in the same plane.

5. Valve as claimed in one of Claims 1 to 4, characterised in that a closing spring (34) is assigned to the closing element (14) in such a way that it exerts a force on the closing element (14) in the direction of the valve seat (30).

6. Valve as claimed in one of Claims 1 to 5, characterised by an extension socket (26) located below the screwed connection piece (17), so that with the valve screwed in, it lies inside the pressure vessel, the closing element (14) being located in this extension socket (26).

7. Valve as claimed in Claim 6, characterised in that a dip tube (50) is inserted into the extension socket (26) and fixed therein.

8. Valve as claimed in Claim 7, characterised by:
an annular shoulder (52) on the dip tube (50) and
a union nut (54) which is screwed into the extension socket (26) in such a way that it axially secures the ring-shaped shoulder (52) on the dip tube (50) in the extension socket (26).

9. Valve as claimed in Claim 5 and Claim 8, characterised in that the closing spring (34) is located in the extension socket (26) and is supported on the annular shoulder (52) on the dip tube (50).

10. Valve as claimed in Claim 8 or 9, characterised by a set screw (58) which is screwed into the extension socket (26) at the side in such a way that it secures the dip tube (50) against twisting.

## Revendications

1. Robinet d'arrêt destiné à être vissé dans un réservoir sous pression, comprenant :
un corps de robinet (12) avec un raccord fileté (17) et un siège de robinet (30) ;
un élément de fermeture (14) adjoint au siège de robinet (30) pour obtenir la fonction d'arrêt du robinet d'arrêt ;
un organe de commande (44), qui est rapporté sur le corps de robinet ; et
une tige de jonction (38), qui assure la jonction mécanique entre l'élément de fermeture (14) dans le corps de robinet (12) et l'organe de commande (44) ;
caractérisé
en ce que le siège de robinet (30) est agencé à l'intérieur ou au-dessous du raccord fileté (17) de manière à se trouver à l'intérieur du réservoir sous pression lorsque le robinet est vissé dans le réservoir sous pression ;
en ce que l'élément de fermeture (14) est adjoint au siège de robinet (30) de telle manière que lorsque le robinet est vissé dans le réservoir sous pression, une surpression dans le réservoir sous pression exerce une force de fermeture en direction du siège de robinet (30) sur l'élément de fermeture (14) s'appuyant de manière étanche contre le siège de robinet (30) ; et
en ce que le corps de robinet (12) et la tige de jonction (38) présentent au-dessus du raccord fileté (17) un endroit destiné à la rupture (60, 62) qui, lorsque le robinet est vissé dans le réservoir sous pression, se trouvent à l'extérieur de celui-ci.

2. Robinet selon la revendication 1, caractérisé en ce que le siège de robinet (30) et l'élément de fermeture (14) sont agencés au-dessous du raccord fileté (17).

3. Robinet selon la revendication 1 ou 2, caractérisé en ce que l'endroit destiné à la rupture (60) sur le corps de robinet (12) est immédiatement contigu au raccord fileté (17).

4. Robinet selon l'une des revendications 1 à 3, caractérisé en ce que lorsque le robinet est fermé, l'endroit destiné à la rupture (62) sur la tige de l'élément de fermeture (14) et l'endroit destiné à la rupture sur le corps de robinet (12) se situent essentiellement dans le même plan.

5. Robinet selon l'une des revendications 1 à 4, caractérisé en ce qu'un ressort de fermeture (34) est adjoint à l'élément de fermeture (14) de manière à exercer sur l'élément de fermeture (14) une force en direction du siège de robinet (30).

6. Robinet selon l'une des revendications 1 à 5, caractérisé par un raccord de rallonge (26) qui est agencé au-dessous du raccord fileté (17) de manière à se trouver à l'intérieur du réservoir sous pression lorsque le robinet est vissé dans ce dernier, l'élément de fermeture (14) étant agencé dans ce raccord de rallonge (26).

7. Robinet selon la revendication 6, caractérisé en ce qu'un tube plongeur (50) est inséré dans le raccord de rallonge (26) et est fixé dans celui-ci.

8. Robinet selon la revendication 7, caractérisé par :
un épaulement annulaire (52) au niveau du tube plongeur (50), et
un écrou-raccord (54) qui est vissé dans le raccord de rallonge (26) de manière à bloquer axialement l'épaulement annulaire (52) au niveau du tube plongeur (50) dans le raccord de rallonge (26).

9. Robinet selon la revendication 5 et la revendication 8, caractérisé en ce que le ressort de fermeture (34) est agencé dans le raccord de rallonge (26) et s'appuie sur l'épaulement annulaire (52) au niveau du tube plongeur.

10. Robinet selon la revendication 8 ou 9, caractérisé par une vis (58) qui est vissée latéralement dans le raccord de rallonge (26) de manière à bloquer le tube plongeur (50) contre la torsion.
